# EUROPÄISCHE PATENTSCHRIFT

(11) **EP 2 014 887 B1**
(45) Veröffentlichungstag und Bekanntmachung des Hinweises auf die Patenterteilung: **09.02.2011**
(21) Anmeldenummer: 08104059.4
(22) Anmeldetag: 21.05.2008
(51) Int. Cl.: F01N 3/22

(54) **Kombiniertes Rückschlag- und Steuerventil**
Combined check and control valve
Soupape anti-retour et de distribution combinée

(30) Priorität: 10.07.2007 DE 102007031957
(43) Veröffentlichungstag der Anmeldung: 14.01.2009
(73) Patentinhaber: Pierburg GmbH, 41460 Neuss (DE)
(72) Erfinder: Dr. Paffrath, Holger, 50259 Pulheim (DE)
(74) Vertreter: Ter Smitten, Hans

(56) Entgegenhaltungen:
- DE-A1- 4 025 267
- DE-U1- 9 415 251
- JP-A- 2 196 121
- JP-A- 55 049 519

## Beschreibung

Die Erfindung betrifft ein kombiniertes Rückschlag- und Steuerventil, insbesondere Sekundärluftventil für eine Verbrennungskraftmaschine, mit einem Gehäuse, in welchem ein Einlass und ein Auslass ausgebildet sind, wobei zwischen dem Einlass und dem Auslass ein oder mehrere Durchgänge angeordnet sind, die jeweils von einem Ventilsitz umgeben sind und durch eine Rückschlagplatte verschließbar sind, die durch zumindest ein Federelement gegen den einen oder die mehreren Ventilsitze belastet ist, welches sich an seiner axial entgegengesetzten Seite gegen ein Begrenzungselement abstützt, das zumindest indirekt fest mit einer Ventilstange verbunden ist, die mittels eines Aktuators betätigbar ist, wobei die Ventilstange zumindest indirekt mit einem Anschlag verbunden ist, der in gleich bleibendem Abstand zum Begrenzungselement angeordnet ist.

Derartige kombinierte Rückschlag- und Steuerventile werden insbesondere zur Dosierung von Sekundärluft in den Abgasstrang einer Verbrennungskraftmaschine genutzt. Das über den Aktuator zu betätigende Begrenzungselement dient dabei zur Steuerung einer zugeführten Sekundärluftmenge, während die federbelastete Rückschlagplatte eines derartigen Ventils dazu dient, Rückströmungen durch Abgaspulsationen in den Sekundärluftzuführungsbereich zuverlässig zu verhindern.

Die Zuführung von Sekundärluft in die Abgassysteme dient insbesondere in der Warmlaufphase der Verbrennungskraftmaschine, in der ein fetteres Gemisch gefahren wird, zur Reduzierung von Schadstoffen, insbesondere CO- und HC-Anteile durch eine Nachverbrennung. Des Weiteren wird ein nachgeschalteter Katalysator schneller auf Betriebstemperatur gebracht.

So wird in der DE 40 25 267 A1 ein Rückschlagventil für eine Gasleitung beschrieben, bei dem eine Rückschlagplatte über ein Tellerfederelement gegen einen Ventilsitz belastet wird. Ein über einen Aktuator verstellbares Begrenzungselement liegt im geschlossenen Zustand des Ventils unter Zwischenlage der Feder gegen die Rückschlagplatte an, während im geöffneten Zustand dieses Begrenzungselement gegen eine fest installierte Hubmaximalbegrenzung anliegt. Zwischen diesen beiden Maximalstellungen ist das Begrenzungselement verschiebbar. Bei derartigen Ventilen ergibt sich das Problem, dass die Rückschlagplatte durch zu große Russablagerungen oder durch Einfrieren zum Kleben am Ventilsitz neigt.

In der DE 94 15 251 U1 wird ein Rückschlagventil für eine Gasleitung vorgeschlagen, bei dem am Hubbegrenzungselement ein oder mehrere Ausnehmungen gebildet sind, in denen einzelne Schraubenfedern angeordnet sind, die die Rückschlagplatte gegen einen Ventilsitz belasten. Zusätzlich weist das Begrenzungselement im Außenumfangsbereich einen sich axial erstreckenden Bund auf, der im geschlossenen Zustand des Ventils ebenfalls gegen einen Ventilsitz anliegt. Um ein Verkleben der Rückschlagplatte oder des Begrenzungselementes an den Ventilsitzen zu vermeiden, sind diese mit einer PTFE-Schicht versehen, durch die ein Anbacken vermieden werden soll. Zusätzlich weist dieses Ventil ein Führungselement auf, auf dem die Rückschlagplatte gleitet und welches fest mit der Ventilstange verbunden ist. Dieses Führungselement weist an seinem zum Aktuator weisenden Ende einen Bund auf, gegen den die Rückschlagplatte lediglich bei der Montage anliegt.

Die Ausführung der Ventilsitze aus PTFE oder mit einer PTFE-Beschichtung bildet einen zusätzlichen Fertigungsschritt und ist somit mit zusätzlichen Kosten verbunden. Des Weiteren kann es bei längerem Betrieb des Ventils passieren, dass Verkokungen oder gefrorenes Wasser sich im Bereich neben dem Ventil festsetzen und im Laufe der Zeit über diesen hinaus wachsen, was ebenfalls zum Verkleben der Rückschlagplatte am Ventilsitz führen kann.

Es ist daher Aufgabe der Erfindung, ein kombiniertes Rückschlag- und Steuerventil zu schaffen, bei dem zuverlässig eine angebackene Rückschlagplatte gelöst werden kann, wobei Zusatzkosten oder zusätzliche Fertigungsschritte weitestgehend vermieden werden sollen.

Diese Aufgabe wird durch den kennzeichnenden Teil des Hauptanspruchs gelöst. Dies bedeutet, dass eine verklebte Rückschlagplatte durch Öffnen des Ventils über den nominellen Hub hinaus bis hin zu einem maximalen Hub dazu führt, dass der Anschlag durch die Kraft des Aktuators gegen die Rückschlagplatte gedrückt wird, wodurch sich diese vom Ventilsitz lösen kann. Gleichzeitig wird der nominelle Hub nicht durch den Anschlag beeinflusst, so dass die übliche Funktion der Rückschlagplatte erhalten bleibt. Der nominelle Hub sollte dabei so groß sein, dass die weitere Hubbewegung in Richtung zum maximalen Hub nur einen geringen Einfluss auf den zu fördernden Volumenstrom hat.

In einer weiterführenden Ausführungsform ist auf der Ventilstange ein Führungselement angeordnet, auf dem die Rückschlagplatte gleitet. Ein derartiges Führungselement verhindert ein Festkleben der Rückschlagplatte an der Ventilstange und somit ein unbeabsichtigtes Öffnen der Rückschlagplatte bei auftretendem Abgasgegendruck bei geöffnetem Begrenzungselement.

In einer weiterführenden Ausführungsform ist der Anschlag als Bund am Führungselement ausgebildet, so dass keinerlei zusätzlichen Bauteile benötigt werden und das Ventil kostengünstig herstellbar bleibt.

Vorzugsweise liegt das Begrenzungselement im geschlossenen Zustand des Rückschlag- und Steuerventils gegen die Rückschiagplatte an, wodurch ein unbeabsichtigtes Öffnen zuverlässig vermieden wird, ohne einen zweiten Ventilsitz für das Begrenzungselement zu benötigen.

In einer alternativen Ausführungsform liegt das Begrenzungselement im geschlossenen Zustand des Rückschlag- und Steuerventils mit einem sich axial erstreckenden Bund am Außenumfang des Begrenzungselements gegen einen zweiten Ventilsitz an, der den ersten Ventilsitz oder die ersten Ventilsitze umgibt. Auch hierdurch wird im geschlossenen Zustand ein unbeabsichtigtes Öffnen zuverlässig vermieden.

In einer bevorzugten Ausführungsform ist der Aktuator ein Elektromagnet, so dass durch eine entsprechende elektronische Steuerung auch Zwischenstellungen des Begrenzungselementes angefahren werden können.

In einer hierzu weiterführenden Ausgestaltung der Erfindung ist der Elektromagnet zur Betätigung der Ventilstange mit einer Spannung ansteuerbar, die unterhalb der Maximalspannung liegt, so dass zum Lösen der Rückschlagplatte und zum Verfahren des Begrenzungselementes in die maximale Hubstellung die Maximalspannung am Elektromagneten anliegt und die Dosierstellungen durch Ansteuern des Elektromagneten mit einer geringeren Spannung angefahren werden, insbesondere die nominelle Hubstellung durch Ansteuern des Elektromagneten mit der Normalspannung angefahren wird. Es ergibt sich somit eine einfache Verstellung zwischen den beiden Stellungen des Begrenzungselementes.

In einer hierzu alternativen Ausführungsform ist der Aktuator ein pneumatisch zu betätigender Aktuator, was beispielsweise durch ein vorgeschaltetes mit einer Vakuumquelle verbundenes elektrisches Umschaltventil geschehen kann. Derartige Ausführungen sind kostengünstig herstellbar. Auch kann ein Druckregler vorgeschaltet werden, so dass wieder unterschiedliche definierte Stellungen angefahren werden könnten.

In einer weiterführenden Ausgestaltung der Erfindung weist das Rückschlag- und Steuerventil eine Lageregelung auf, wodurch wiederum Zwischenstellungen angefahren werden können und insbesondere zwischen dem Maximalhub und dem nominellen Hub unterschieden werden kann. Auch bei sich ändernden Randbedingungen kann durch die Lageregelung zuverlässig die gewünschte Stellung des Begrenzungselementes angefahren werden.

Hierzu weist die Lageregelung vorteilhafterweise einen Magneten auf, der mit der Ventilstange gekoppelt ist und in Wirkverbindung zu einem berührungslosen magnetoresistivem Sensor steht, der fest im Gehäuse angeordnet ist. Derartige Lageregelungseinheiten unterliegen praktisch keinem Verschleiß und weisen somit eine hohe Lebensdauer auf.

Vorzugsweise ist das zumindest eine Federelement eine Schraubenfeder, die die Ventilstange radial umgibt, so dass eine gleichmäßige Belastung sowohl des Begrenzungselementes als auch der Rückschlagplatte die Folge ist. Ein Kippen der beiden Bauteile zueinander und eine daraus resultierende Undichtigkeit der Rückschlagplatte werden weitestgehend vermieden.

In einer alternativen Ausführung sind zumindest drei Federelemente in Ausbuchtungen am Begrenzungselement angeordnet, die sich gegen die Rückschlagplatte abstützen. Auch hierdurch wird ein Kippen der Rückschlagplatte zum Begrenzungselement und somit ein unbeabsichtigtes Öffnen der Durchgänge vermieden.

Ein derartig ausgeführtes kombiniertes Rückschlag- und Steuerventil ist unempfindlich gegen Vereisung oder Verrußung, da ein Lösen der Rückschlagplatte durch die auf die Rückschlagklappe wirkende Kraft des Aktuators bei Verschiebung der Ventilstange über den nominellen Hub hinaus sichergestellt ist. Ein derartiges Ventil ist kostengünstig herstellbar und weist eine hohe Lebensdauer auf. Fehler während des Betriebes sind durch diese Konstruktion weitestgehend ausgeschlossen.

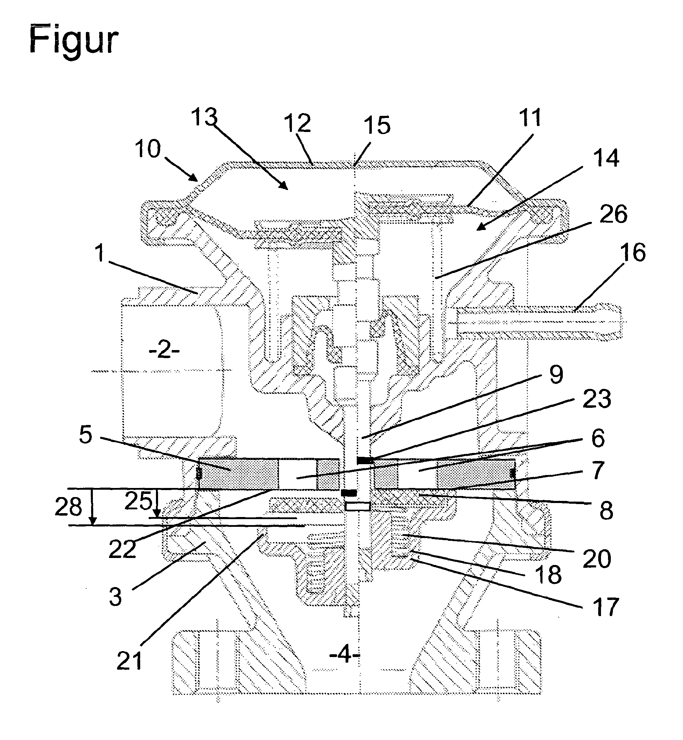

Ein Ausführungsbeispiel ist in der Zeichnung dargestellt und wird nachfolgend beschrieben.

Die Figur zeigt ein Ausführungsbeispiel eines erfindungsgemäßen kombinierten Rückschlag- und Steuerventils in Seitenansicht, wobei die linke Hälfte der Figur das Ventil in Maximalhubstellung zeigt und die rechte Hälfte das Ventil in geschlossener Stellung zeigt.

Das dargestellte kombinierte Rückschlag- und Steuerventil besteht im Wesentlichen aus einem zweiteiligen Gehäuse, bei dem im ersten Gehäuseteil 1 ein Einlass 2 ausgebildet ist und im zweiten Gehäuseteil 3 ein Auslass 4 ausgebildet ist. Zwischen den beiden Gehäuseteilen 1, 3 und somit dem Einlass 2 und dem Auslass 4 ist eine Platte 5 angeordnet, welche mehrere Durchgänge 6 aufweist, die jeweils von ersten Ventilsitzen 7 umgeben sind. Die Durchgänge 6 werden durch eine Rückschlagplatte 8 beherrscht, so dass je nach Stellung der Rückschlagplatte 8 entweder ein Luftstrom vom Einlass 2 zum Auslass 4 strömen kann oder der Strömungsweg durch Aufsitzen der Rückschlagplatte 8 auf den Ventilsitzen 7 verschlossen wird.

Die Rückschlagplatte 8 ist gleitend auf einer Ventilstange 9 angeordnet, welche über einen pneumatischen Aktuator 10 betätigbar ist. Entsprechend ist ein erstes Ende der Ventilstange 9 fest mit einer Membran 11 verbunden, die Teil des pneumatischen Aktuators 10 ist und deren Außenumfang über ein Deckelelement 12 zwischen dem ersten Gehäuseteil 1 und dem Deckelelement 12 eingeklemmt ist, so dass durch die Membran 11 ein Raum 12 zwischen dem ersten Gehäuseteil 1 und dem Deckelement 12 in zwei Räume 13, 14 getrennt wird.

Im Raum 13 befindet sich aufgrund eines Loches 15 im Deckelelement 12 Atmosphärendruck, während im darunter liegenden Raum 14 ein Steuerdruck herrscht, der über eine Leitung 16 in den Raum 14 eingeleitet wird. Die Leitung 16 ist dabei mit einer beliebigen Unterdruckquelle verbunden, so dass je nach anliegendem Druck in der Leitung 16 und somit im Raum 14 die Ventilstange 9 vom Ruhezustand in einen das Ventil öffnenden Zustand überführt werden kann.

Am entgegengesetzten zweiten Ende der Ventilstange 9 ist ein Begrenzungselement 17 befestigt, welches sich somit mit der Ventilstange 9 bei Betätigung des Aktuators 10 bewegt. Dieses Begrenzungselement 17 weist eine Ausnehmung 18 auf, welche konzentrisch zur Ventilstange 9 ausgebildet ist und in der ein Federelement 20 in Form einer Schraubenfeder angeordnet ist, deren erstes axiales Ende gegen das Begrenzungselement 17 anliegt und deren entgegengesetztes axiales Ende gegen die Rückschlagplatte 8 anliegt. Dieses Begrenzungselement 17 ist somit über die Ventilstange 9 zwischen einer Schließstellung und einer Maximalhubstellung verschiebbar, wobei die Maximalhubstellung in der linken Hälfte der Figur dargestellt ist und die Schließstellung in der rechten Hälfte der Figur dargestellt ist.

Es ist dabei in der rechten Hälfte der Figur zu erkennen, dass das Schließelement zusätzlich einen in Achsrichtung verlaufenden Bund 21 aufweist, der in geschlossener Stellung gegen einen zweiten Ventilsitz 22 anliegt, der konzentrisch zur Ventilstange 9 angeordnet ist und die Ventilspitze 7 der Rückschlagplatte 8 umgibt.

Erfindungsgemäß ist nun vorgesehen, dass an der Ventilstange 9 ein Anschlag 23 ausgebildet ist, der in vorliegendem Ausführungsbeispiel durch einen in einer Nut angeordneten Ring gebildet wird. Denkbar wäre es auch, diesen Anschlag 23 als radialen Bund an der Ventilstange 9 oder, falls auf der Ventilstange 9 ein Führungselement für die Rückschlagplatte angeordnet wäre, als entsprechenden Bund am Führungselement auszubilden. Dieser Anschlag 23 ist in einem Abstand zum Begrenzungselement 17 auf der Ventilstange 9 angeordnet, der größer ist als der nominelle Hub 25 des Begrenzungselementes 17 für den maximal gewünschten Durchfluss und kleiner ist als ein maximaler Hub 28. Zur Verwirklichung des maximalen Hubs 28 weist die Platte 5 weist eine entsprechend große Bohrung auf, ist also beabstandet von der Ventilstange 9, so dass ein Durchführen des Anschlages 23 durch die Platte 5 ermöglicht wird.

Wird dieses kombinierte Rückschlag- und Steuerventil nun beispielsweise als Sekundärluftventil genutzt, so befindet sich das Ventil in den meisten Situationen in der im rechten Teil dargestellten, die Durchgänge 6 verschließenden Stellung. In der Warmlaufphase der Verbrennungskraftmaschine ist es nun notwendig, zusätzlich Luft in das Abgassystem einzublasen, so dass während dieser Phase ein Unterdruck über die Leitung 16 in den Raum 14 eingeleitet wird. Hierdurch ist der anstehende Druck im Raum 13 höher als der Druck im Raum 14, so dass bei Übersteigen der daraus resultierenden Kraft über die Kraft einer im zweiten Raum angeordneten Schraubenfeder 26, die das Ventil in Schließrichtung belastet, die Ventilstange 9 in Öffnungsrichtung bewegt wird. Hierdurch löst sich das Begrenzungselement 17 vom Ventilsitz 22, so dass Luft vom Einlass 2 zum Auslass 4 strömen kann. Dies geschieht, sobald der auf die Rückschlagplatte 8 wirkende Druck an der Einlassseite 2 größer ist als der durch die Schraubenfeder 20 auf die Rückschlagplatte wirkende Druck. Üblicherweise führt dies zum Öffnen des Ventils, da im Bereich des Auslasses 4 ein deutlich geringerer Druck vorliegt als am Einlass 2. Entsprechend löst sich auch die Rückschlagplatte 8 vom ersten Ventilsitz 7. Sollten nun Abgaspulsationen auftreten, die zu einem Überdruck im Bereich des Auslasses 4 führen, so wird die Rückschlagplatte 8 gegen die Ventilsitze 7 gedrückt, so dass ein Rückströmen von Abgas in den Bereich des Einlasses 2 verhindert wird.

Sollte jedoch beispielsweise bei auftretenden Minustemperaturen bei Neustart des Motors im Winter die Rückschlagplatte 8 aufgrund von Eis- oder Rußbildung im Bereich der Ventilsitze 7 an einem oder mehreren der Ventilsitze 7 kleben bleiben, so würde die Funktion des Ventils gestört.

Aus diesem Grunde ist es notwendig, Vorrichtungen vorzusehen, mit denen die Rückschlagplatte 8 gelöst wird. Hierzu dient der Anschlag 23, der bei einer Verstellung der Ventilstange 9 über den nominellen Hub 25 hinaus von oben gegen die Rückschlagplatte 8 drückt und diese durch die Kraft des Aktuators 10 vom Ventilsitz 7 löst. Um diese Funktion zu erfüllen und gleichzeitig die Funktion der Rückschlagplatte 8 nicht zu mindern ist in vorliegendem Ausführungsbeispiel der axiale Abstand zwischen dem Anschlag 23 und dem im geschlossenen Zustand auf dem zweiten Ventilsitz 22 angeordnetem Bund 21 des Begrenzungselementes 17 nicht nur kleiner als der maximale Hub 28 des Begrenzungselementes 17, sondern auch größer als der nominelle Hub des Begrenzungselementes 17, so dass es zu einem entsprechenden Lösen durch die Kraft des Aktuators 10 nur bei Überschreiten des nominellen Hubes 25 kommt. In diesem Lösezustand befindet sich das Begrenzungselement 17 in der in der linken Hälfte der Figur dargestellten maximalen Hubstellung 28. Um derartige unterschiedliche Hübe einstellen zu können, wäre es notwendig, die Leitung 16 mit einem vorgeschalteten Ventil auszustatten, welches sowohl einen Maximaldruck einstellen kann, der zu einem Lösen der Rückschlagplatte 8 führt als auch einen nominellen Unterdruck einstellen kann, der anschließend die Ventilstange 9 wieder zum nominellen Hub zurückbewegt.

Es besteht nun die Möglichkeit, entweder bei jedem Neustart des Motors die Ventilstange zunächst über den nominellen Hub 25 bis zum maximalen Hub 28 zu verstellen und so bei jedem Neustart ein Lösen der Rückschlagplatte 8 sicherzustellen, oder eine Strommessung vorzusehen, so dass der maximale Hub 28 immer dann eingestellt wird, falls zunächst detektiert wird, dass ein Sekundärluftstrom trotz gewünschter Einstellung auf den nominellen Hub 25 nicht vorliegt.

Auch könnte ein Lageregler genutzt werden, der beispielsweise aus einem am Ende der Ventilstange 9 angeordneten Magneten sowie einem mit diesem Magneten korrespondierenden berührungslosen magnetoresistivem Sensor bestehen könnte, der beispielsweise am Deckelelement 12 angeordnet sein könnte.

Selbstverständlich ist es auch möglich, ein derartiges Ventil statt mit einem pneumatischen Aktuator mit einem Elektromagneten auszustatten, der dann mit zumindest zwei unterschiedlichen Spannungen versorgt werden kann. Üblicherweise wäre der Elektromagnet somit mit einer Normalspannung ansteuerbar, mittels derer der nominelle Hub 25 des Begrenzungselementes 17 eingestellt wird und mit einer Maximalspannung, mittels derer der maximale Hub 28 des Begrenzungselementes 17 eingestellt wird.

Selbstverständlich wäre es auch denkbar, mit einem derartigen Elektromagneten oder auch mit einem pneumatischen Aktuator bei einer entsprechenden vorhandenen Regelung Zwischenstellungen anzufahren.

Es sei noch erwähnt, dass bei optimierter Auslegung des Ventils der effektiv wirksame Strömungsquerschnitt bei Verstellung zwischen dem nominellen und dem maximalen Hub sich weitestgehend nicht ändert, so dass eine ausreichende Zufuhr von Sekundärluft sichergestellt wird.

Es sollte deutlich sein, dass verschiedene Ausführungsformen im Aufbau des Sekundärluftventils denkbar sind, insbesondere die Anordnung des Federelementes 20 anders ausgeführt werden kann bzw. durch mehrere Federelemente erfolgen kann. Auch wurde bereits erwähnt, dass verschiedene Aktuatoren für derartige Ventile denkbar sind. Des Weiteren ist der Einsatzbereich eines derartigen Ventils nicht auf die beschriebene Sekundärluftzuführung beschränkt.

## Patentansprüche

1. Kombiniertes Rückschlag- und Steuerventil, insbesondere Sekundärluftventil für eine Verbrennungskraftmaschine,
mit einem Gehäuse (1, 3),
in welchem ein Einlass (2) und ein Auslass (4) ausgebildet sind,
wobei zwischen dem Einlass (2) und dem Auslass (4) ein oder mehrere Durchgänge (6) angeordnet sind, die jeweils von einem Ventilsitz (7) umgeben sind, und durch eine Rückschlagplatte (8) verschließbar sind,
die durch zumindest ein Federelement (20) gegen den einen oder die mehreren Ventilsitze (7) belastet ist, welches sich an seiner axial entgegengesetzten Seite gegen ein Begrenzungselement (17) abstützt,
das zumindest indirekt fest mit einer Ventilstange (9) verbunden ist, die mittels eines Aktuators (10) betätigbar ist,
wobei die Ventilstange (9) zumindest indirekt mit einem Anschlag (23) verbunden ist, der in gleich bleibendem Abstand zum Begrenzungselement (17) angeordnet ist,
**dadurch gekennzeichnet, dass**
der Anschlag (23) derart an der Ventilstange positioniert ist, dass der Anschlag (23) bei Öffnung des Begrenzungselementes (17) über den nominellen Hub (25) hinaus gegen die Rückschlagplatte (8) drückt.

2. Kombiniertes Rückschlag- und Steuerventil, insbesondere Sekundärluftventil, nach Anspruch 1, **dadurch gekennzeichnet, dass** auf der Ventilstange (9) ein Führungselement angeordnet ist, auf dem die Rückschlagplatte (8) gleitet.

3. Kombiniertes Rückschlag- und Steuerventil, insbesondere Sekundärluftventil, nach einem der Ansprüche 1 oder 2, **dadurch gekennzeichnet, dass** der Anschlag (23) als Bund am Führungselement ausgebildet ist.

4. Kombiniertes Rückschlag- und Steuerventil, insbesondere Sekundärluftventil, nach einem der vorhergehenden Ansprüche, **dadurch gekennzeichnet, dass** das Begrenzungselement (17) im geschlossenen Zustand des Rückschlag- und Steuerventils gegen die Rückschlagplatte (8) anliegt.

5. Kombiniertes Rückschlag- und Steuerventil, insbesondere Sekundärluftventil, nach einem der vorhergehenden Ansprüche, **dadurch gekennzeichnet, dass** das Begrenzungselement im geschlossenen Zustand des Rückschlag- und Steuerventils mit einem sich axial erstreckenden Bund (21) am Außenumfang des Begrenzungselementes (17) gegen einen zweiten Ventilsitz (22) anliegt, der den ersten Ventilsitz (7) umgibt.

6. Kombiniertes Rückschlag- und Steuerventil, insbesondere Sekundärluftventil, nach einem der vorhergehenden Ansprüche, **dadurch gekennzeichnet, dass** der Aktuator (10) ein Elektromagnet ist.

7. Kombiniertes Rückschlag- und Steuerventil, insbesondere Sekundärluftventil, nach Anspruch 6, **dadurch gekennzeichnet, dass** der Elektromagnet zur Betätigung der Ventilstange (9) mit einer Spannung ansteuerbar ist, die unterhalb der Maximalspannung liegt.

8. Kombiniertes Rückschlag- und Steuerventil, insbesondere Sekundärluftventil, nach einem der Ansprüche 1 bis 6, **dadurch gekennzeichnet, dass** der Aktuator (10) ein pneumatisch zu betätigender Aktuator ist.

9. Kombiniertes Rückschlag- und Steuerventil, insbesondere Sekundärluftventil, nach einem der vorhergehenden Ansprüche, **dadurch gekennzeichnet, dass** das Rückschlag- und Steuerventil eine Lageregelung aufweist.

10. Kombiniertes Rückschlag- und Steuerventil, insbesondere Sekundärluftventil, nach einem der vorhergehenden Ansprüche, **dadurch gekennzeichnet, dass** die Lageregelung einen Magneten aufweist, der mit der Ventilstange (9) gekoppelt ist und in Wirkverbindung zu einem berührungslosen magnetoresistivem Sensor steht, der fest im Gehäuse (1) angeordnet ist.

11. Kombiniertes Rückschlag- und Steuerventil, insbesondere Sekundärluftventil, nach einem der vorhergehenden Ansprüche, **dadurch gekennzeichnet, dass** das zumindest eine Federelement (20) eine Schraubenfeder ist, die die Ventilstange (9) radial umgibt.

12. Kombiniertes Rückschlag- und Steuerventil, insbesondere Sekundärluftventil, nach einem der Ansprüche 1 bis 10, **dadurch gekennzeichnet, dass** zumindest drei Federelemente in Ausbuchtungen (18) am Begrenzungselement angeordnet sind, die sich gegen die Rückschlagplatte abstützen.

## Claims

1. A combined check and control valve, in particular a secondary air valve for an internal combustion engine,
comprising a housing (1, 3)
in which an inlet (2) and an outlet (4) are formed,
one or a plurality of passages (6) being provided between the inlet (2) and the outlet (4), which passages are each surrounded by a valve seat (7) and are adapted to be closed by means of a check plate (8),
which plate is stressed against the one or the plurality of valve seats (7) by means of a spring element (20) which is supported at its axially opposite side on a limiting element (17),
which element is at least indirectly fixedly connected to a valve rod (9) actuatable by means of an actuator (10),
said valve rod (9) being at least indirectly connected to a stop (23) arranged at a constant distance from the limiting element (17),
**characterized in that**
said stop (23) is positioned on the valve rod such that, when the limiting element (17) is opened, the stop presses against the check plate (8) beyond the rated stroke (25).

2. The combined check and control valve, in particular a secondary air valve, of claim 1, **characterized in that** a guide element is arranged on the valve rod (9), on which the check plate (8) slides.

3. The combined check and control valve, in particular a secondary air valve, of one of claims 1 or 2, **characterized in that** the stop 23 is in the form of a collar at the guide element.

4. The combined check and control valve, in particular a secondary air valve, of one of the preceding claims, **characterized in that** said limiting element (17) abuts against the check plate (8) when the check and control valve is in the closed state.

5. The combined check and control valve, in particular a secondary air valve, of one of the preceding claims, **characterized in that**, in the closed state of the check and control valve, said limiting element, by means of an axially extending collar (21) at the outer circumference of said limiting element (17), abuts against a second valve seat (22) surrounding the first valve seat (7).

6. The combined check and control valve, in particular a secondary air valve, of one of the preceding claims, **characterized in that** the actuator (10) is an electromagnet.

7. The combined check and control valve, in particular a secondary air valve, of claim 6, **characterized in that** the electromagnet is adapted to be driven with a voltage to actuate the valve rod (9), said voltage being below the maximum voltage.

8. The combined check and control valve, in particular a secondary air valve, of one of claims 1 to 6, **characterized in that** said actuator (10) is a pneumatically operated actuator.

9. The combined check and control valve, in particular a secondary air valve, of one of the preceding claims, **characterized in that** the check and control valve comprises a position control.

10. The combined check and control valve, in particular a secondary air valve, of one of the preceding claims, **characterized in that** the position control comprises a magnet coupled with the valve rod (9) and being operatively connected with a contactless magnetoresistive sensor fixedly arranged in the housing (1).

11. The combined check and control valve, in particular a secondary air valve, of one of the preceding claims, **characterized in that** said at least one spring element (20) is a helical spring that radially surrounds the valve rod (9).

12. The combined check and control valve, in particular a secondary air valve, of one of claims 1 to 10, **characterized in that** at least three spring elements are arranged in recesses (18) in the limiting element, which spring elements are supported on the check plate.

## Revendications

1. Soupape anti-retour et de distribution combinée, notamment soupape d'air secondaire pour un moteur à combustion interne,
comprenant un boitier (1, 3),
dans lequel son formées une entrée (2) et une sortie (4),
un ou plusieurs passages (6) étant formés entre ladite entrée (2) et ladite sortie (4), chaque passage étant entouré par une siège de soupape (7) et étant apte à être fermé par une plaque anti-retour (8),
ladite plaque étant sollicitée contre ladite une ou les plusieurs sièges de soupape (7) par au moins un élément ressort (20) qui, à son côté axialement opposé, s'appui sur un élément limiteur (17),
qui est au moins indirectement solidaire à une tige de soupape (9) actionnable par un actionneur (17),
ladite tige de soupape (9) étant au moins indirectement reliée à une butée (23) disposée à distance constante dudit élément limiteur (17),
**caractérisée en ce que**
ladite butée (23) est positionnée sur ladite tige de soupape de sorte que, ledit élément limiteur (17) étant ouvert, ladite butée (23) presse contre ladite plaque anti-retour (8) au-delà de la course nominale (25).

2. Soupape anti-retour et de distribution combinée, notamment soupape d'air secondaire, selon la revendication 1, **caractérisée en ce qu'**un élément de guidage est prévu sur ladite tige de soupape (9), ladite plaque anti-retour (8) glissant sur ledit élément.

3. Soupape anti-retour et de distribution combinée, notamment soupape d'air secondaire, selon les revendications 1 ou 2, **caractérisée en ce que** ladite butée (23) est formée comme une collerette sur ledit élément de guidage.

4. Soupape anti-retour et de distribution combinée, notamment soupape d'air secondaire, selon l'une quelconque des revendications précédentes, **caractérisée en ce qu'**en état fermé de ladite soupape anti-retour et de distribution, ledit élément limiteur (17) est en contact avec ladite plaque anti-retour (8).

5. Soupape anti-retour et de distribution combinée, notamment soupape d'air secondaire, selon l'une quelconque des revendications précédentes, **caractérisée en ce qu'**en état fermé de ladite soupape anti-retour et de distribution, ledit élément limiteur s'appui, par une collerette axiale (21) formée à la périphérie dudit élément limiteur (17), sur une deuxième siège de soupape (22) entourant ladite première siège de soupape (23).

6. Soupape anti-retour et de distribution combinée, notamment soupape d'air secondaire, selon l'une quelconque des revendications précédentes, **caractérisée en ce que** ledit actionneur (10) est un électro-aimant.

7. Soupape anti-retour et de distribution combinée, notamment soupape d'air secondaire, selon la revendication 6, **caractérisée en ce que** ledit électro-aimant est apte à être commandé par une tension pour actionner ladite tige de soupape (9), ladite tension étant inférieure à la tension maximale.

8. Soupape anti-retour et de distribution combinée, notamment soupape d'air secondaire, selon l'une quelconque des revendications 1 à 6, **caractérisée en ce que** ledit actionneur (10) est un actionneur pneumatique.

9. Soupape anti-retour et de distribution combinée, notamment soupape d'air secondaire, selon l'une quelconque des revendications précédentes, **caractérisée en ce que** ladite soupape anti-retour et de distribution comprend un asservissement de position.

10. Soupape anti-retour et de distribution combinée, notamment soupape d'air secondaire, selon l'une quelconque des revendications précédentes, **caractérisée en ce que** l'asservissement de position comprend un aimant couplé avec ladite tige de soupape (9) et coopérant avec un capteur magnéto-résistif sans contact qui est fixé dans ledit boitier (1).

11. Soupape anti-retour et de distribution combinée, notamment soupape d'air secondaire, selon l'une quelconque des revendications précédentes, **caractérisée en ce que** ledit au moins un élément ressort (20) est un ressort hélicoïdal radialement entourant ladite tige de soupape (9).

12. Soupape anti-retour et de distribution combinée, notamment soupape d'air secondaire, selon l'une quelconque des revendications 1 à 10, **caractérisée en ce qu'**au moins trois éléments ressorts sont disposés dans des creux (18), s'appuyant sur ladite plaque anti-retour.
